# FASCICULE DE BREVET EUROPEEN

(11) **EP 3 560 396 B1**
(45) Date de publication et mention de la délivrance du brevet: **11.11.2020**
(21) Numéro de dépôt: 19166979.5
(22) Date de dépôt: 03.04.2019
(51) Int. Cl.: A47J 37/07, A47L 17/04

(54) **DISPOSITIF DE FIXATION D'UN FEUTRE D'ESSUYAGE ET ENSEMBLE QUI LE COMPORTE**
VORRICHTUNG ZUM BEFESTIGEN EINES REINIGUNGSVLIESES, UND DIESE UMFASSENDE EINHEIT
DEVICE FOR ATTACHING A WIPER FELT AND ASSEMBLY COMPRISING SAME

(30) Priorité: 24.04.2018 FR 1853566
(43) Date de publication de la demande: 30.10.2019
(73) Titulaire: Krampouz, 29700 Pluguffan (FR)
(72) Inventeur: COLIN, Fabrice, 29710 POULDREUZIC (FR)
(74) Mandataire: SEB Developpement Brevets

(56) Documents cités:
- US-A- 1 321 387
- US-A- 2 990 564
- US-A- 3 113 335
- US-A1- 2006 029 457
- US-A1- 2013 233 347
- US-B1- 6 192 545

## Description

### DOMAINE DE L'INVENTION

La présente invention est relative à un dispositif de fixation d'un feutre d'essuyage de la surface lisse d'un appareil de cuisson, telle que la surface d'une crêpière.

Elle se rapporte également à un ensemble qui comporte un tel dispositif.

### ARRIERE-PLAN TECHNOLOGIQUE DE L'INVENTION

Le présent déposant fabrique et commercialise de tels appareils de cuisson, et tout particulièrement des crêpières.

Pour un bon usage d'un tel appareil et une meilleure cuisson des crêpes et galettes, il est bien connu qu'il est nécessaire de répandre périodiquement à la surface de la crêpière une petite quantité de matière grasse liquide telle que de l'huile.

Il est également nécessaire d'essuyer la plaque de cuisson régulièrement de manière à la débarrasser des résidus alimentaires qui se sont accumulés dessus.

Pour ce faire, le présent déposant propose des "tampons" qui permettent d'appliquer une petite couche régulière d'une telle matière grasse. Ces tampons comportent un organe de préhension à l'opposé duquel s'étend une surface de réception d'un feutre, lequel est régulièrement imbibé de matière grasse.

Par le terme "feutre", on entend dans l'ensemble de la présente demande, une feuille peu épaisse d'un matériau synthétique configuré pour retenir et libérer à la demande de la matière grasse liquide qui l'imbibe.

Dans le cas des "tampons" précités, la périphérie de ladite surface est pourvue d'une gorge dans laquelle est engagé à force le pourtour du feutre. Cette opération n'est pas facile à mettre en oeuvre en raison de la relative rigidité du feutre. De plus, il arrive que ce feutre se détache partiellement de manière inopinée de son support.

De plus, la relative rigidité de ce feutre est due en partie à son épaisseur non négligeable.

Et cela occasionne un autre problème. En effet, ce tampon a tendance à stocker la matière grasse avec laquelle il est imbibé. Autrement dit, il retient plus de matière grasse qu'il n'est requis pour traiter la totalité de la surface de la crêpière. De ce fait, la matière grasse est retenue relativement longtemps dans le feutre, de sorte qu'elle a tendance à se dégrader, ce qui n'est pas souhaitable sur le plan alimentaire.

Aussi, il existe un besoin non satisfait de disposer d'un dispositif de fixation d'un feutre d'essuyage de la surface lisse d'un appareil de cuisson, telle que la surface d'une crêpière qui ne présente pas les inconvénients précités, et qui permet de faire usage d'un feutre très fin, qui ne stocke pas la matière grasse et qui est de qualité alimentaire incontestable.

Un état de la technique dans ce domaine peut être illustré par les documents US 1321387, US 2990564, US 2013/233347 et US 2006/029457.

### RESUME DE L'INVENTION

Ainsi, la présente invention est relative à un dispositif de fixation d'un feutre d'essuyage de la surface lisse d'un appareil de cuisson, telle que la surface d'une crêpière, qui comporte un organe de préhension à l'opposé duquel s'étend un élément à surface lisse et plane, de réception d'un feutre d'essuyage, qui comporte en périphérie dudit élément à surface lisse et plane au moins un organe de pincement et que cet élément à surface lisse et plane et cet organe de pincement sont configurés pour être sélectivement rapprochés ou éloignés l'un de l'autre pour pincer, respectivement libérer ledit feutre, caractérisé par le fait que ledit au moins un organe de pincement est fixe, tandis que ledit élément à surface lisse et plane est mobile.

Selon d'autres caractéristiques non limitatives et avantageuses de ce dispositif, à savoir :
- ledit organe de préhension est relié cinématiquement au dit élément à surface lisse et plane ;
- ledit élément à surface lisse et plane comprend une plaque constituant ladite surface lisse et plane, qui est ceinturée par un muret périphérique ;
- ledit organe de pincement comporte un corps central pourvu d'au moins un rabat périphérique, ce rabat et ledit muret périphérique s'étendant en regard l'un de l'autre, parallèlement ou sensiblement parallèlement l'un à l'autre et en sens contraire ;
- ledit organe de pincement est recouvert au moins partiellement par un capot dans lequel est formée au moins une gorge de guidage formant un chemin de came, tandis que ledit organe de préhension est engagé sur ledit capot, la liaison entre ledit organe de pincement et ledit élément à surface lisse et plane étant assurée par un plot engagé dans ladite gorge ;
- le fait que ledit plot est amovible ;
- ledit dispositif est configuré de sorte que ledit élément à surface lisse et plane et ledit organe de pincement sont sélectivement rapprochés ou éloignés par rotation dudit organe de préhension sur lui-même, d'une fraction de tour.

La présente invention se rapporte également à un ensemble constitué d'un dispositif tel que décrit ci-dessus qui est équipé d'un feutre d'essuyage et de retenue d'une matière grasse liquide.

### BREVE DESCRIPTION DES DESSINS

D'autres caractéristiques et avantages de l'invention apparaîtront à la lecture de la description suivante d'un mode de réalisation préféré de l'invention. Cette description est faite en référence aux dessins annexés dans lesquels :
- la figure 1 est une vue de dessous d'un mode de réalisation possible du dispositif selon l'invention ;
- la figure 2 est une vue de face du dispositif de la figure 1, lequel est représenté dans une position active de travail dans laquelle il est équipé d'un feutre ;
- la figure 3 est une vue en perspective du dispositif de la figure 2 ;
- la figure 4 est une vue analogue à la figure 3, le dispositif étant montré ici dans une position de changement du feutre ;
- les figures 5 et 6 sont des vues respectivement de côté et de dessus du dispositif des figures précédentes, en position active de travail ;
- la figure 7 est une vue en coupe dudit dispositif, selon le plan de coupe VII-VII de la figure 5 ;
- la figure 8 est une vue agrandie de la partie de la figure 7 repérée par un cercle ;

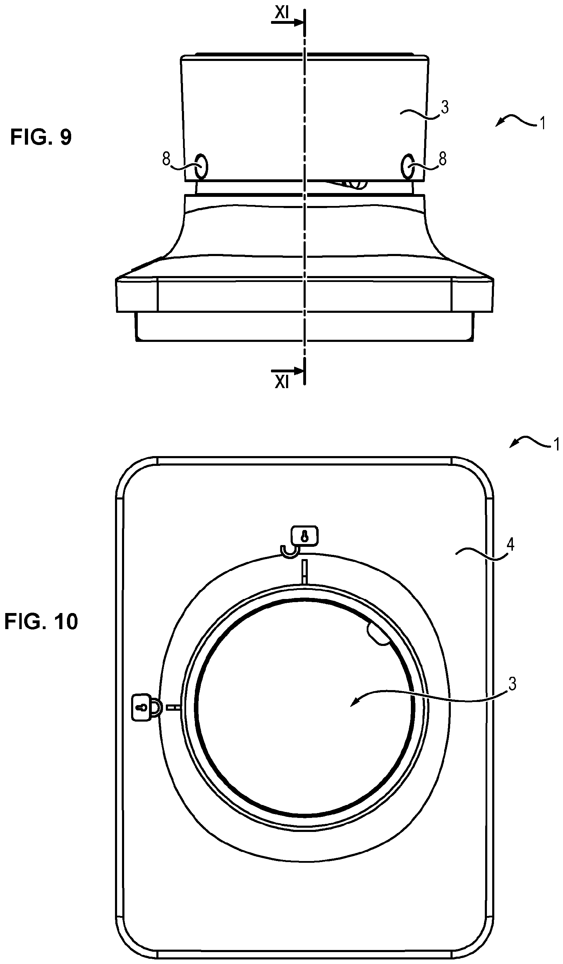

- les figures 9 à 12 sont des vues respectivement analogues aux figures 6 à 8, le dispositif étant représenté dans la position de changement de feutre de la figure 4 ;
- La figure 13 est une vue en perspective du dispositif des figures précédentes, avec éclatement partiel, destinée à montrer plus spécifiquement les moyens qui permettent de le faire passer de la position de travail à la position de changement de feutre ;
- la figure 14 est une vue en perspective du même dispositif, le capot étant soulevé de manière à rendre visibles certaines pièces disposées dans son espace interne

### DESCRIPTION DETAILLEE DE L'INVENTION

Le dispositif de fixation 1 représenté aux figures annexées est majoritairement formé de matière plastique.

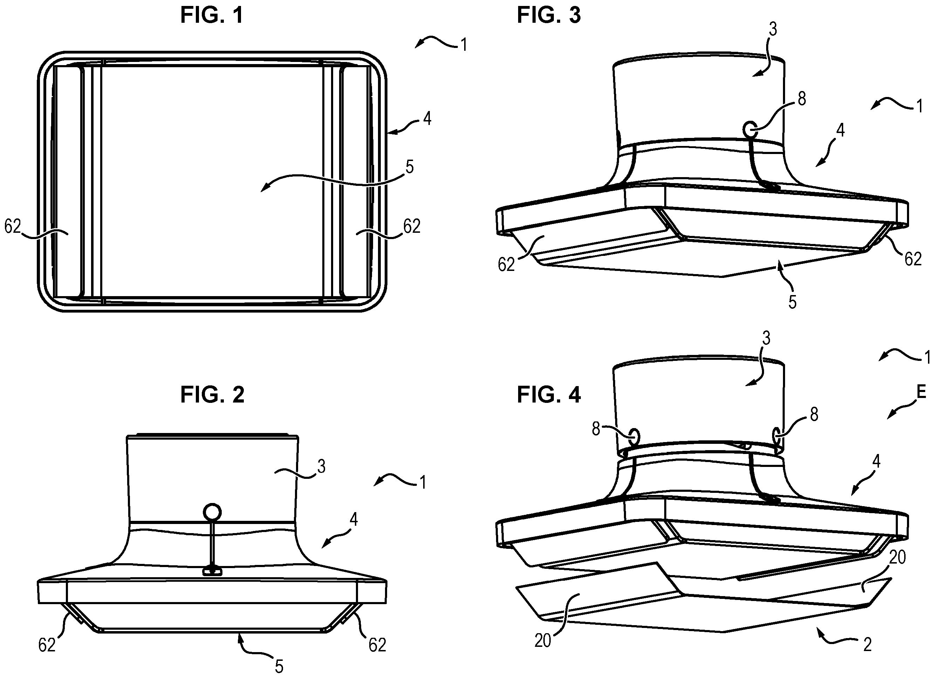

Il comporte essentiellement un organe de préhension 3 qui surplombe un socle 4, lequel recouvre des éléments de fixation d'un feutre d'essuyage 2, visible notamment à la figure 4.

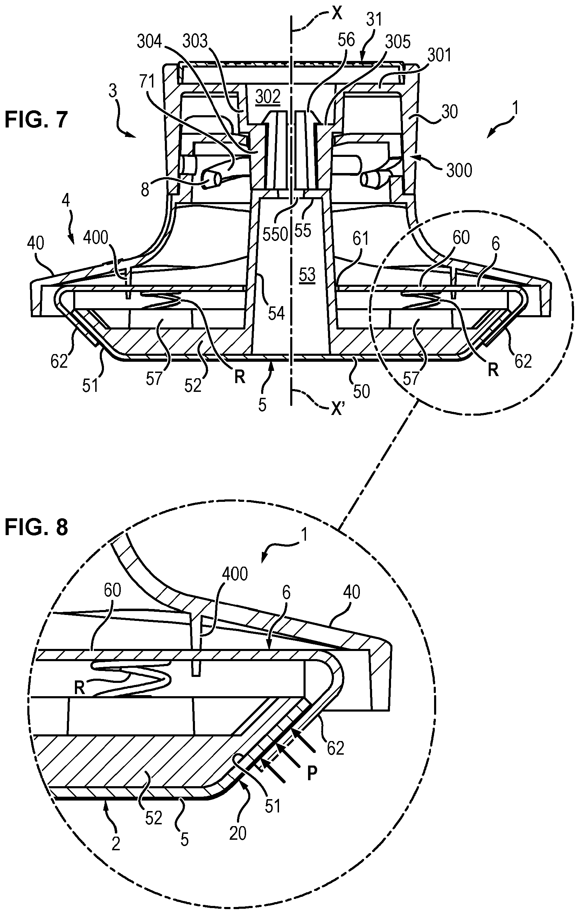

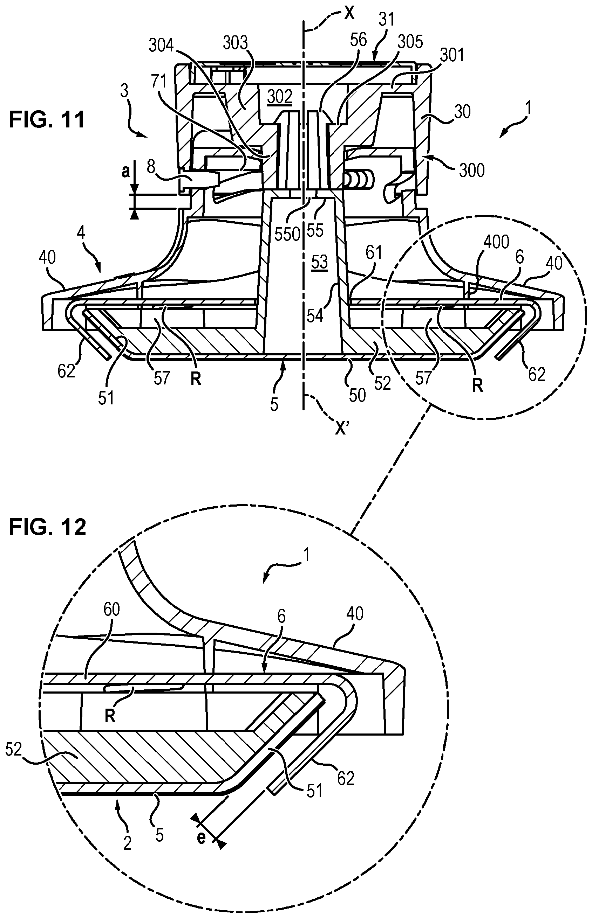

L'organe de préhension 3, que l'on peut qualifier également de manette, a une forme généralement cylindrique d'axe de révolution X-X' (voir tout particulièrement les figures 7 et 11).

Il est constitué d'un corps 30 et reçoit un capot de fermeture amovible 31 au niveau de son extrémité supérieure.

Le corps 30 est constitué d'un élément cylindrique externe 30 qui est ouvert dans sa partie inférieure et partiellement fermé, non loin de son extrémité supérieure, par une cloison en forme de disque 301.

La cloison 301 présente une ouverture circulaire 302 centrée sur l'axe X-X', et cette cloison se poursuit en direction de l'extrémité inférieure du corps 30 par deux portions cylindriques 303 et 304 de diamètres décroissants, ces portions se raccordant l'une à l'autre par un décrochement annulaire 305 parallèle à la cloison 301. On notera que l'élément cylindrique 304 le plus bas est de diamètre le plus réduit et s'arrête sensiblement au niveau de l'extrémité inférieure de l'élément cylindrique externe 300.

Le socle 4 est essentiellement constitué d'un capot en matière plastique 40 qui recouvre plusieurs éléments dont un élément à surface lisse et plane référencé 5 sur les figures. Cet élément 5 est de préférence en métal, tel que de l'acier inoxydable de qualité alimentaire.

Il comporte une plaque 50 à surface lisse qui, dans l'exemple de réalisation présenté ici, s'inscrit sensiblement dans un rectangle. Cette plaque est ceinturée par un muret périphérique 51, qui forme avec la face supérieure de la plaque 50,un angle obtus. En quelque sorte, on peut considérer que l'élément 5 a la forme d'un récipient creux.

L'élément 5 reçoit dans l'espace délimité par la plaque 50 et son muret périphérique 51 une pièce 52 en matière plastique de liaison à l'organe de préhension 3 précité.

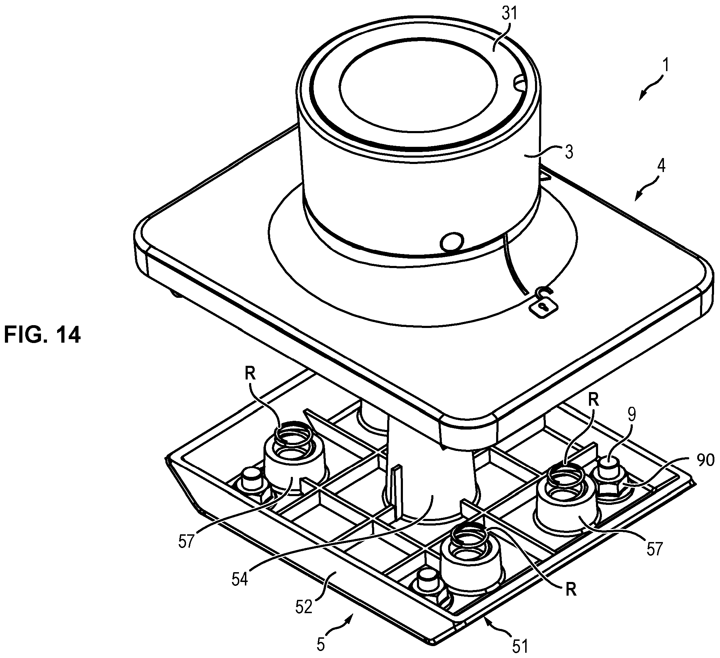

A cet effet et comme montré à la figure 14, quatre goujons 9 sont soudés à la plaque 50 et traversent la pièce 52. Des écrous 90 engagés sur les goujons 9 assurent la fixation de ces deux éléments.

Cette pièce 52 présente un évidement circulaire 53 d'axe X-X' qui délimite une colonne tubulaire verticale 54 légèrement tronconique, dont le fond 55 est percé d'une ouverture axiale 550.

De part et d'autre de cette ouverture, et de la face supérieure du fond 55, s'étendent verticalement plusieurs doigts 56 élastiquement déformables dont l'extrémité supérieure libre a une forme de dent de verrouillage, ainsi que cela est bien connu.

La pièce de liaison 52 comporte par ailleurs de part et d'autre de la colonne 54 des puits verticaux 57 qui délimitent chacun une cavité, chaque puits 57 recevant un ressort hélicoïdal R dont l'axe est parallèle à l'axe X-X'.

Chacun de ces ressorts est emprisonné, c'est-à-dire pris en sandwich entre la pièce de liaison 50 et un organe de pincement référencé 6 sur les figures annexées.

Cet organe de pincement 6 est réalisé dans le même métal que l'élément 5. Il présente un corps central plan 60, sensiblement de même dimension et de même forme que l'élément 5. Il est percé d'une ouverture centrale 61 qui permet de l'emmancher sur l'élément 5 jusqu'à se trouver en butée sur la colonne 54, emprisonnant ainsi les ressorts hélicoïdaux R précités.

Par ailleurs, le corps central comporte deux rabats 62 opposés. On notera que ces rabats présentent la même orientation que le muret périphérique 51 de l'élément 5. Ils sont donc parallèles et s'étendent en direction opposée.

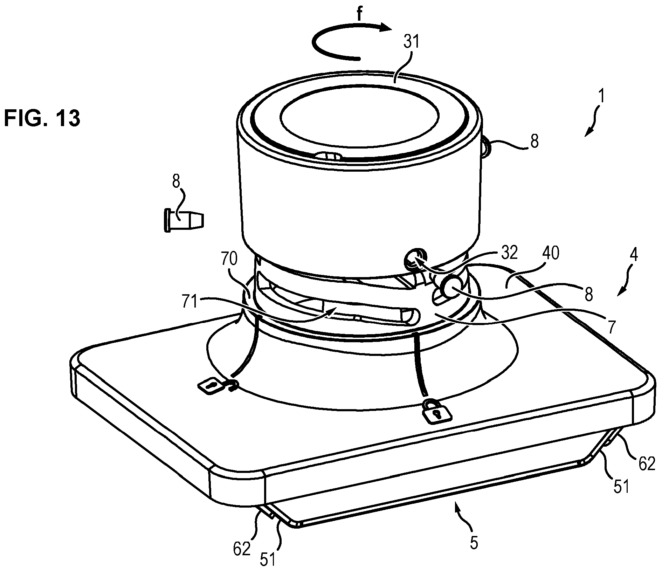

L'organe de pincement 6 qui vient d'être décrit est recouvert par le capot 40 précité, ainsi que cela est plus particulièrement visible à la figure 13.

Le capot 40 remonte dans sa partie centrale pour former un cylindre 7 de réception et de guidage de l'organe de préhension 3.

A cette fin, il comporte un rebord d'appui 70 et sa paroi comporte trois gorges de guidage 71, lesquelles sont angulairement équidistantes deux à deux selon la périphérie de ce cylindre de réception 7.

Comme montré plus particulièrement à la figure 13, chaque gorge de guidage 71 comporte un long tronçon horizontal, qui se poursuit à une extrémité par une portion descendante.

Les dimensions du cylindre 7 et de l'organe de préhension 3 sont telles qu'il est possible d'engager cet organe 3 sur le capot 40 jusqu'à ce que l'organe 3 vienne en butée contre le rebord d'appui 70 décrit plus haut. Cet engagement se fait axialement à force sur les doigts élastiquement déformables 56, jusqu'à verrouiller l'organe de préhension 3 par leur extrémité en forme de dent qui vient se positionner contre l'épaulement 305 de l'élément 3.

Par ailleurs, cet assemblage reçoit trois petits plots 8 qui viennent se positionner dans des ouvertures 32 prévues dans l'élément cylindrique 300 de l'élément 3 pour venir s'engager à l'intérieur des gorges 71 précitées.

Le présent dispositif trouve son utilité lorsqu'il est utilisé en combinaison avec un feutre d'essuyage 2 tel que celui qui est représenté sur les figures. Il s'agit par exemple d'un feutre de structure connue, constitué d'une trame de fibre de verre très fine qui est enduite de PTFE (polytétrafluoroéthylène).

Comme particulièrement visible à la figure 4, un tel feutre 2 présente une forme sensiblement identique à celle de l'élément 5 à surface lisse qui a été décrit plus haut et comporte notamment deux rabats 20 qui s'étendent à l'opposé l'un de l'autre.

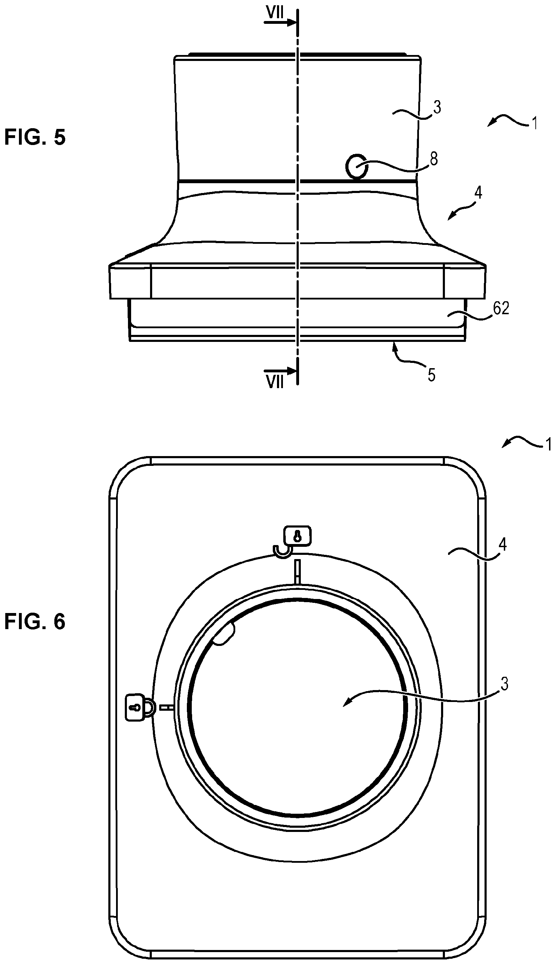

La mise en place d'un tel feutre se fait de la manière suivante. Avant une première utilisation, le dispositif 1 occupe la position visible notamment aux figures 1 à 8 et 13. Dans cette position, l'élément 5 et l'organe de pincement 6 se touchent et cette position est symbolisée par le fait que l'un des plots 8 décrit plus haut est positionné à la verticale d'un symbole formé sur le socle 4 et consistant en la représentation d'un cadenas verrouillé.

Partant de cette position, un opérateur se saisit de l'organe de préhension 3 et lui fait opérer une rotation sur lui-même d'une fraction de tour dans le sens horaire (flèche f de la figure 13).

Ceci force les plots 8 à se déplacer à l'intérieur des gorges de guidage, ce qui force à déplacer l'organe de préhension 3 vers le haut. Comme visible à la figure 11, il apparaît donc un petit jeu a entre la partie inférieure de l'organe de préhension 3 et le rebord d'appui 70 du cylindre 7.

Dans la mesure où l'élément 5 est lié cinématiquement à l'organe de préhension 3, il s'opère un déplacement également vers le haut de l'élément 5 de sorte que les ressorts R se trouvent alors comprimés entre l'élément 5 et l'organe de pincement 6.

On se situe alors dans la position illustrée aux figures 11 et 12 dans laquelle il existe un petit jeu e entre le muret périphérique 51 de l'élément 5 et les rabats 62 de l'organe de pincement. Ce petit jeu est suffisant pour permettre d'y introduire les extrémités opposées 20 du feutre 2.

Bien entendu, par un mouvement inverse de l'organe de préhension 3 vis-à-vis du socle 4, on revient alors à la position initiale telle qu'illustrée notamment à la figure 7, de sorte qu'il s'opère un pincement du feutre 2 comme montré par les flèches P à la figure 8.

On peut alors utiliser le dispositif selon l'invention en le saisissant par l'organe de préhension 3, pour l'essuyage d'une plaque de cuisson telle que celle d'une crêpière.

Quand le feutre a suffisamment servi et doit être changé pour des raisons d'hygiène notamment, il suffit de procéder comme on l'a expliqué plus haut de manière à permettre l'écartement de l'élément 5 vis à vis de l'organe 6.

## Revendications

1. Dispositif (1) de fixation d'un feutre d'essuyage de la surface lisse d'un appareil de cuisson, telle que la surface d'une crêpière, qui comporte un organe de préhension (3) à l'opposé duquel s'étend un élément (5) à surface lisse et plane, de réception d'un feutre d'essuyage (2), avec, en périphérie dudit élément (5) à surface lisse et plane, au moins un organe de pincement (6), cet élément (5) à surface lisse et plane et cet organe de pincement (6) étant configurés pour être sélectivement rapprochés ou éloignés l'un de l'autre pour pincer, respectivement libérer ledit feutre (2), **caractérisé par le fait que** ledit au moins un organe de pincement (6) est fixe, tandis que ledit élément (5) à surface lisse et plane est mobile.

2. Dispositif (1) selon la revendication 1, **caractérisé par le fait que** ledit organe de préhension (3) est relié cinématiquement au dit élément (5) à surface lisse et plane.

3. Dispositif (1) selon l'une des revendications précédentes, **caractérisé par le fait que** ledit élément (5) à surface lisse et plane comprend une plaque (50) constituant ladite surface lisse et plane, qui est ceinturée par un muret périphérique (51).

4. Dispositif (1) selon la revendication 3, **caractérisé par le fait que** ledit organe de pincement (6) comporte un corps central (60) pourvu d'au moins un rabat périphérique (62), ce rabat (62) et ledit muret périphérique (51) s'étendant en regard l'un de l'autre, parallèlement ou sensiblement parallèlement l'un à l'autre et en sens contraire.

5. Dispositif (1) selon la revendication 4, **caractérisé par le fait que** ledit organe de pincement (6) est recouvert au moins partiellement par un capot (4) dans lequel est formée au moins une gorge de guidage (71) formant un chemin de came, tandis que ledit organe de préhension (3) est engagé sur ledit capot (4), la liaison entre ledit organe de pincement (6) et ledit élément (5) à surface lisse et plane étant assurée par un plot (8) engagé dans ladite gorge (71).

6. Dispositif (1) selon la revendication 5, **caractérisé par le fait que** ledit plot (8) est amovible.

7. Dispositif (1) selon l'une des revendications précédentes, **caractérisé par le fait qu'**il est configuré de sorte que ledit élément (5) à surface lisse et plane et ledit organe de pincement (6) sont sélectivement rapprochés ou éloignés par rotation dudit organe de préhension (3) sur lui-même, d'une fraction de tour.

8. Ensemble (E) constitué d'un dispositif (1) de fixation selon l'une des revendications précédentes et d'un feutre (2) d'essuyage et de retenue d'une matière grasse liquide.

## Patentansprüche

1. Vorrichtung (1) zum Befestigen eines Wischfilzes der glatten Oberfläche eines Kochgeräts, wie der Oberfläche einer Crêpe-Backplatte, die ein Greiforgan (3) umfasst, an dessen entgegengesetztem Ende sich ein Element (5) mit glatter und flacher Oberfläche zum Aufnehmen eines Wischfilzes (2) erstreckt, mit, an dem Umfang des Elements (5) mit glatter und flacher Oberfläche, mindestens einem Klemmorgan (6), wobei dieses Element (5) mit glatter und flacher Oberfläche und dieses Klemmorgan (6) ausgelegt sind, um selektiv einander angenähert oder voneinander entfernt zu werden, um jeweils den Filz (2) einzuklemmen bzw. freizugeben, **dadurch gekennzeichnet, dass** das mindestens eine Klemmorgan (6) stationär ist, während das Element (5) mit glatter und flacher Oberfläche beweglich ist.

2. Vorrichtung (1) nach Anspruch 1, **dadurch gekennzeichnet, dass** das Greiforgan (3) kinematisch mit dem Element (5) mit glatter und flacher Oberfläche verbunden ist.

3. Vorrichtung (1) nach einem der vorstehenden Ansprüche, **dadurch gekennzeichnet, dass** das Element (5) mit glatter und flacher Oberfläche eine Platte (50) umfasst, die die glatte und flache Oberfläche bildet, die durch eine Umfangsleiste (51) umgeben ist.

4. Vorrichtung (1) nach Anspruch 3, **dadurch gekennzeichnet, dass** das Klemmorgan (6) einen zentralen Körper (60) umfasst, der mit mindestens einem umfänglichen Umschlag (62) versehen ist, wobei sich dieser Umschlag (62) und die Umfangsleiste (51) einander gegenüber parallel oder im Wesentlichen parallel zueinander in entgegengesetzte Richtung erstrecken.

5. Vorrichtung (1) nach Anspruch 4, **dadurch gekennzeichnet, dass** das Klemmorgan (6) mindestens teilweise von einer Haube (4) abgedeckt ist, in der mindestens eine Führungsnut (71) gebildet ist, die eine Nockenbahn bildet, während das Greiforgan (3) auf der Haube (4) eingreift, wobei die Verbindung zwischen dem Klemmorgan (6) und dem Element (5) mit glatter und flacher Oberfläche durch einen Stift (8), der in die Nut (71) eingerückt ist, sichergestellt ist.

6. Vorrichtung (1) nach Anspruch 5, **dadurch gekennzeichnet, dass** der Stift (8) abnehmbar ist.

7. Vorrichtung nach einem der vorstehenden Ansprüche, **dadurch gekennzeichnet, dass** sie derart ausgelegt ist, dass das Element (5) mit glatter und flacher Oberfläche und das Klemmorgan (6) selektiv durch Drehung des Greiforgans (3) um sich selbst um einen Umdrehungsbruchteil angenähert oder entfernt werden.

8. Anordnung (E), die aus einer Befestigungsvorrichtung (1) nach einem der vorstehenden Ansprüche und einem Filz (2) zum Abwischen und Halten eines flüssigen Fetts besteht.

## Claims

1. Device (1) for fixing a felt for wiping the smooth surface of a cooking appliance, such as the surface of a crepe pan, which includes a gripping member (3) opposite which extends an element (5) with a flat smooth surface for receiving a wiping felt (2), with, at the periphery of said element (5) with a flat smooth surface, at least one pinching member (6), this element (5) with a flat smooth surface and this pinching member (6) being configured to be selectively moved towards or away from each other to pinch, respectively release, said felt (2), **characterised by** the fact that said at least one pinching member (6) is stationary while said element (5) with a flat smooth surface is movable.

2. Device (1) according to claim 1, **characterised by** the fact that said gripping member (3) is kinematically connected to said element (5) with a flat smooth surface.

3. Device (1) according to one of the preceding claims, **characterised by** the fact that said element (5) with a flat smooth surface comprises a plate (50) constituting said flat smooth surface, which is surrounded by a peripheral wall (51).

4. Device (1) according to claim 3, **characterised by** the fact that said pinching member (6) includes a central body (60) provided with at least one peripheral flap (62), this flap (62) and said peripheral wall (51) extending facing one another, parallel or substantially parallel to each other and in the opposite direction.

5. Device (1) according to claim 4, **characterised by** the fact that said pinching member (6) is at least partially covered by a cap (4) in which is formed at least one guide groove (71) forming a cam path, while said gripping member (3) is engaged on said cap (4), the connection between said pinching member (6) and said element (5) with flat smooth surface being provided by a stud (8) engaged in said groove (71).

6. Device (1) according to claim 5, **characterised by** the fact that said stud (8) is removable.

7. Device (1) according to one of the preceding claims, **characterised by** the fact that it is configured such that said element (5) with flat smooth surface and said pinching member (6) are selectively moved towards or away from each other through rotation of said gripping member (3) on itself, by a fraction of a turn.

8. Assembly (E) consisting of a fixing device (1) according to one of the preceding claims and a felt (2) for wiping and retaining a liquid fat.
